# EUROPEAN PATENT APPLICATION

(11) **EP 1 551 167 A1**
(43) Date of publication of application: **06.07.2005**
(21) Application number: 04022195.4
(22) Date of filing: 17.09.2004
(51) Int. Cl.: H04N 1/21

(54) **Apparatus and method for controlling output sound of a digital camera**

(30) Priority: 29.12.2003 KR 2003099007
(71) Applicant: Samsung Electronics Co., Ltd., Suwon-si, Gyeonggi-do 442-742 (KR)
(72) Inventor: Moon, Jeong-Kyu, Yeongtong-gu Suwon-si Gyeonggi-do (KR)
(74) Representative: Grünecker, Kinkeldey, Stockmair & Schwanhäusser Anwaltssozietät

(57) **Abstract**

An apparatus and method for controlling an output sound in a digital camera. When an input for an image pickup operation is present, a shutter opening time is calculated. A shutter is opened and then a shutter opening sound is outputted. The shutter is closed after waiting for the expiration of the shutter opening time and then a shutter closing sound is outputted.

## Description

### PRIORITY

This application claims priority to an application entitled "APPARATUS AND METHOD FOR CONTROLLING OUTPUT SOUND OF DIGITAL CAMERA", filed in the Korean Intellectual Property Office on December 29, 2003 and assigned Serial No. 2003-99007, the contents of which are hereby incorporated by reference.

### BACKGROUND OF THE INVENTION

### 1. Field of the Invention

The present invention relates to an apparatus and method for controlling an output sound, and more particularly to an apparatus and method for controlling a shutter sound and an alarm sound in a digital camera.

### 2. Description of the Related Art

Conventionally, digital cameras store, in a memory, an image extracted by a sensor rather than a film, which is different from existing analog cameras. Because a conventional digital camera uses an electronic shutter based on an electric circuit, it does not generate a mechanical shutter sound as in an existing focal-plane shutter or lens shutter of an existing analog camera. However, most of the conventional digital cameras provide a function for generating an artificial shutter sound at the time of taking a picture so that users familiar with the existing analog cameras can have the same feel as when using the existing analog cameras. This artificial sound is outputted when a picture is taken such that an opening sound is generated at the time of opening the shutter and a closing sound is generated at the time of closing the shutter, to mimic the sound made by the existing analog camera with the mechanical shutter. The artificial sound corresponding to the shutter opening and closing sounds varies with a shutter speed. That is, the shutter speed can constantly vary with an amount of external light and an opening state of an iris so that proper exposure can be achieved.

The internal construction of a conventional digital camera includes a controller, a lens, an image pickup device, a memory, a pickup key input unit, an output sound processor and a speaker SPK.

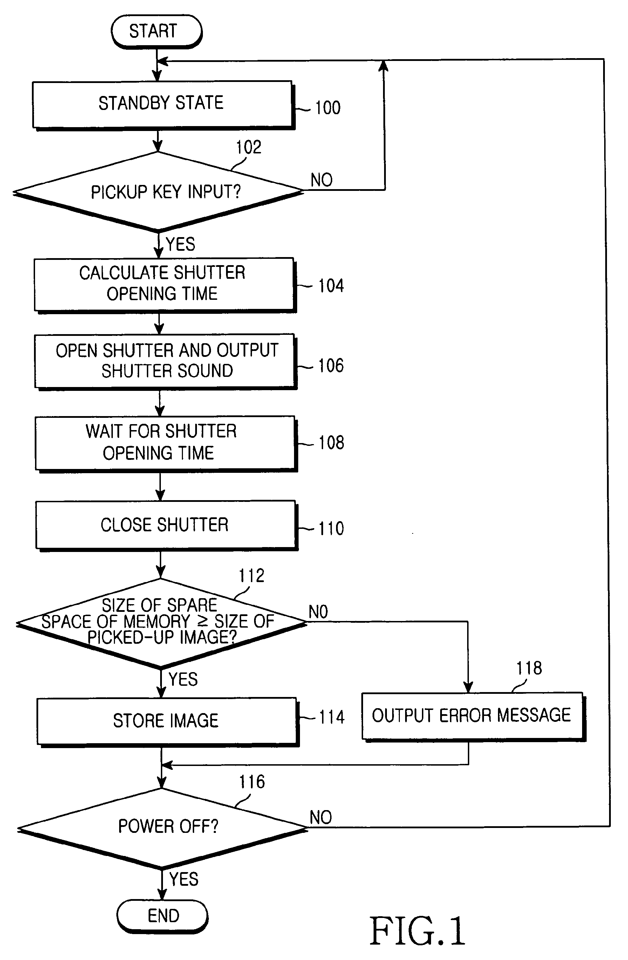

A process for outputting a shutter sound in the conventional digital camera will be described with reference to the flow chart of FIG. 1.

First, if a user inputs a pickup button or key at step 102 while a standby state is maintained at step 100, the controller calculates a shutter opening time at step 104. At this time, the controller calculates the shutter opening time according to an amount of external light inputted through the lens and an opening degree of the iris. The controller opens a shutter and outputs a shutter sound at step 106 and waits for the duration of the shutter opening time at step 108. Subsequently, the controller controls the shutter to be closed at step 110, and determines, at step 112, whether or not a size of a spare space of the memory is greater than or equal to a size of a picked-up image. If the spare space of the memory can store the picked-up image, the controller controls the memory to store the picked-up image at step 114. Otherwise, if the spare space of the memory cannot store the picked-up image because a size of the spare space of the memory is smaller than a size of the picked-up image, the controller outputs an error message at step 118. Then, the controller determines, at step 116, whether or not power is in an OFF state. If the power is in the OFF state, the process ends. Otherwise, the controller continuously keeps the standby state at the above step 100.

As shown in FIG. 1, if the pickup button is pressed, an amount of light inputted through the lens from the image pickup device is measured and the controller calculates a proper shutter opening time to open the shutter according to a result of the calculation. Moreover, the controller waits for the calculated shutter opening time to expire and then closes the shutter. The controller opens the shutter and then reads shutter sound data from the memory so that the speaker can output the shutter sound.

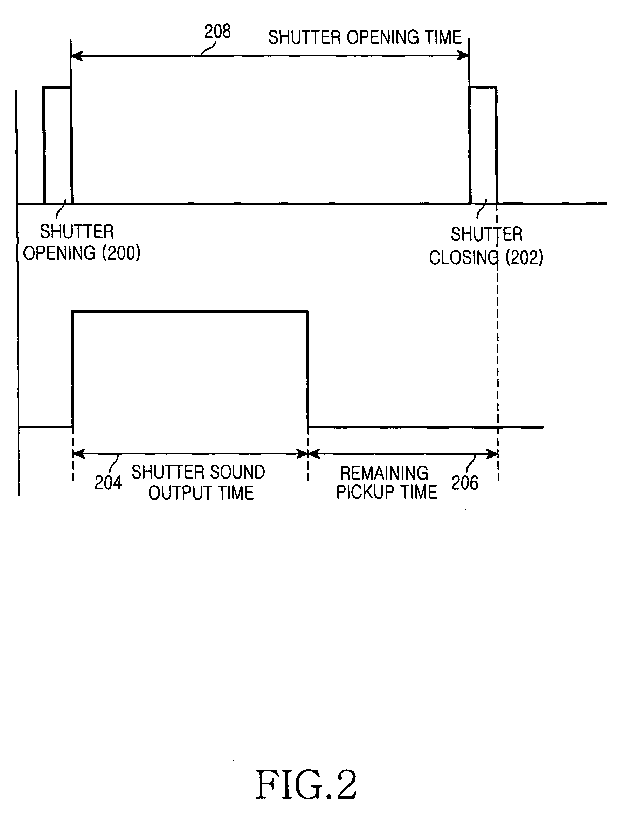

As the shutter opening time is typically greater than a fixed shutter sound output time, a timing difference increases. This will be described with reference to FIG. 2. FIG. 2 is a timing chart illustrating the shutter sound output time in the conventional digital camera. First, when the user presses the pickup button, the shutter is opened as indicated by reference numeral 200 and subsequently a previously stored output sound is outputted for a shutter sound output time 204. Then, the controller controls shutter closing as indicated by reference numeral 202 after waiting the duration of for a shutter opening time 208. As the shutter sound output is completed before the shutter closing time, that is, before an image pickup operation is completed, a remaining pickup time 206 is present.

As described above, the shutter sound of the conventional digital camera is always outputted only for a preset shutter sound output time. In this case, while the sensor continuously receives light in a state where an amount of light is insufficient so that the pickup operation is continuously performed, the user can erroneously determine that the pickup operation has been completed immediately after the shutter sound output time.

Thus, the conventional digital camera can only give the user the same feel as in the existing analog camera. The conventional digital camera cannot appropriately perform a basic function that outputs the shutter sound necessary for informing the user of the fact that the image pickup operation has been completed.

Because the memory's spare space is checked when the picked-up image is stored after the image pickup operation has been performed and an error message is outputted according to a result of the checking, the user cannot recognize an insufficient memory space immediately after picking up the image when the image cannot be stored.

Until the pickup operation of the digital camera is completed, the camera must be fixed without being shaken so that the pickup operation can be appropriately performed. However, because the conventional digital camera outputs the shutter sound only for a predetermined shutter sound output time irrespective of a shutter opening time, there is a problem in that the user cannot correctly determine how long it will be necessary to maintain a fixed digital camera state. Moreover, where the user continuously picks up the image without recognizing an insufficient memory space because the memory space is checked after the image pickup operation has been performed, there is another problem in that the user can miss an important scene.

### SUMMARY OF THE INVENTION

Therefore, it is an object of the present invention to provide an apparatus and method for carrying out a control operation so that an output sound of a digital camera can be generated for an actual image pickup time.

It is another object of the present invention to provide an apparatus and method that can vary a shutter sound output time according to an amount of exposure light when a pickup operation is carried out and hence give the user a realistic feel.

It is another object of the present invention to provide an apparatus and method for carrying out a control operation so that a user can be notified of an end time of a pickup operation when an image is picked up through a digital camera, thereby allowing the user to maintain stability of the camera during the pickup operation.

It is yet another object of the present invention to provide an apparatus and method for carrying out a control operation so that a user can be notified of the fact that a spare space of a memory storing an image is insufficient before an image pickup operation.

In accordance with one aspect of the present invention, the above and other objects can be accomplished by the provision of an apparatus according to claim 1.

In accordance with another aspect of the present invention, the above and other objects can be accomplished by the provision of a method according to claim 8.

Preferred embodiments are disclosed in the dependent claims.

The shutter in a digital camera usually is an electronic shutter. An electronic shutter can be opened and closed electronically.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a flow chart illustrating a process for controlling a shutter sound output in a conventional digital camera;
FIG. 2 is a timing chart illustrating a shutter sound output time in the conventional digital camera;
FIG. 3 is a block diagram illustrating the internal construction of a digital camera in accordance with an embodiment of the present invention;
FIG. 4 is a flow chart illustrating a process for controlling a shutter sound and an alarm sound in the digital camera in accordance with an embodiment of the present invention;
FIG. 5A is a timing chart illustrating a shutter sound output time in accordance with an embodiment of the present invention; and
FIG. 5 B is a t iming c hart illustrating a shutter s ound output time and a n alarm sound output time in accordance with an embodiment of the present invention.

### DETAILED DESCRIPTION OF THE PREFERRED EMBODIMENTS

Now, preferred embodiments of the present invention will be described in detail with reference to the annexed drawings. In the following description, a detailed description of known functions and configurations incorporated herein will be omitted when it may make the subject matter of the present invention unclear.

In order to control output sounds such as an artificial shutter sound of a digital camera and an alarm sound necessary for identifying a spare space of a memory, the present invention allows a shutter sound of the digital camera to be generated for the actual exposure time of a sensor under light. Moreover, the present invention allows a shutter sound interval to differ according to the exposure time, so that a user can get a realistic feel. The present invention can improve reliability of the digital camera by correctly notifying the user of an end time of a pickup operation and can facilitate a stable pickup operation. The present invention allows the user to determine whether or not a picked-up image has been blurred after the pickup operation because the user can recognize that an amount of light was insufficient, by means of the shutter sound.

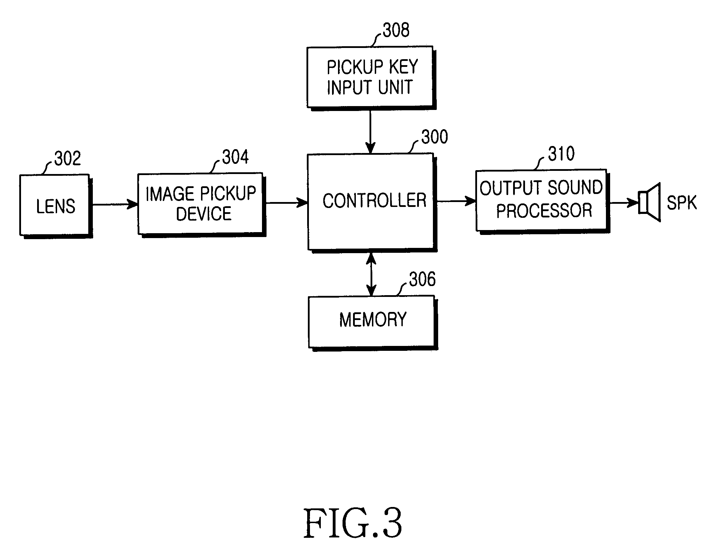

An internal construction of the digital camera for generating a shutter sound for the actual exposure time of the sensor under light will be described with reference to the block diagram of FIG. 3, in accordance with an embodiment of the present invention. The digital camera includes a controller 300, a lens 302, a pickup device 304, a memory 306, an output sound processor 310, a speaker SPK and a pickup key input unit 308. The controller 300 controls an overall operation of the digital camera. In particular, the controller 300 in accordance with the present invention performs a control operation so that the shutter sound of the digital camera can be generated for an actual exposure time, that is, an image pickup time. An amount of light inputted through the lens 302 is measured, and a shutter opening time is calculated according to the measured light amount. The controller 300 controls the image pickup device 304 so that the shutter can be opened for the calculated shutter opening time. At this point, data of a shutter opening sound stored in the memory 306 is read and the shutter opening sound is outputted to the speaker through the output sound processor 310 according to the read data. Subsequently, a shutter closing sound is read from the memory 306 and is outputted to the speaker through the output sound processor 310, for a remaining time other than the shutter opening time for outputting the shutter opening sound. That is, the shutter opening sound is outputted for the shutter opening time, and the shutter closing sound is outputted for the shutter closing time. The user is notified of an end time of the pickup operation so that a stable pickup operation can be performed.

Moreover, after completing the pickup operation, the controller 300 determines whether or not a size of a spare space of the memory 306 is greater than or equal to a size of the picked-up image and determines whether or not a size of a remaining spare space of the memory 306 after the picked-up image has been stored is equal to or larger than a basic image size. That is, the controller 300 determines in advance whether or not the space of the memory 306 can store not only a currently picked-up image but also the next image. If the remaining spare space of the memory 306 from which a space for storing the picked-up image is subtracted can store the next image, a sound, such as a film winding motor sound, is outputted and the user is notified of a normal state. On the other hand, if a size of the remaining spare space of the memory 306 is smaller than the basic image size, that is, if the space for storing the next image is insufficient, an alarm sound is outputted and the user is notified of an insufficient memory space. The memory 306 in accordance with the present invention stores the shutter opening sound, the shutter closing sound, the alarm sound for notifying the user of the fact that memory capacity is insufficient, and the film winding motor sound.

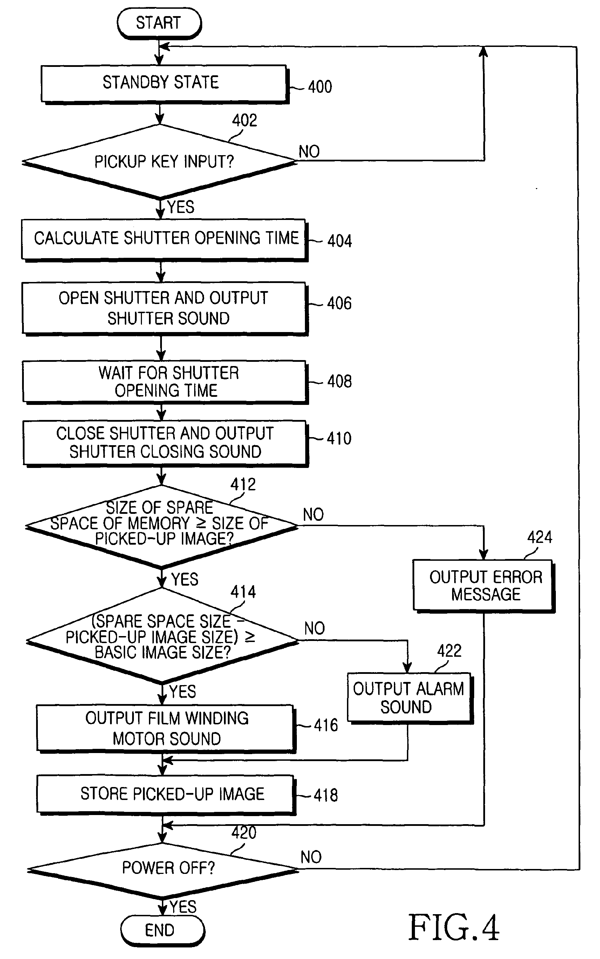

A process for controlling an output of the shutter opening sound, the shutter closing sound, the alarm sound for notifying the user of the fact that memory capacity is insufficient or the film winding motor sound in the digital camera shown in FIG. 3 will be described with reference to the flow chart of FIG. 4, in accordance with an embodiment of the present invention.

First, the controller 300 maintains a standby state after a power ON state at step 400. The controller 300 determines, at step 402, whether or not a pickup key has been inputted at step 402. If the pickup key has been inputted, the controller 300 calculates a shutter opening time at step 404. The controller 300 opens the shutter, and reads the shutter opening sound from the memory 306 to output the read shutter opening sound at step 406. Subsequently, the controller 300 waits for the duration of the shutter opening time at step 408. At the expiration of the shutter opening time, the controller 300 closes the shutter and reads the shutter closing sound from the memory 306 to output the read shutter closing sound at step 410. Subsequently, the controller 300 checks a spare space of the memory 306 at step 412. If a size of the spare space of the memory 306 is greater than or equal to a size of a picked-up image, the controller 300 proceeds to step 414. On the other hand, if a size of the spare space of the memory 306 is smaller than a size of a picked-up image, the controller 300 outputs an error message at step 424

If the size of the spare space of the memory 306 is greater than or equal to the picked-up image size, the controller 300 determines, at step 414, whether a size of the remaining spare space of the memory 306 from which a space for storing the picked-up image is subtracted is greater than or equal to a basic image size. That is, a determination is made in advance as to whether or not the remaining spare space of the memory 306 can store not only a currently picked-up image but also the next image. If the size of the remaining spare space of the memory 306 from which the space for storing the picked-up image is subtracted is greater than or equal to the basic image size, the film winding motor sound is outputted and the user is notified of a normal state at step 416. The picked-up image is stored in the memory 306 at step 418. The controller 300 then checks the power OFF state at step 420. If a current state is the power OFF state, the process ends. Otherwise, the controller 300 maintains the standby state at the above step 400.

On the other hand, at step 414, if the size of the remaining spare space is smaller than the basic image size, the controller 300 recognizes that the remaining spare space cannot store the next image and outputs an alarm sound at step 422, such that the user can be notified of the fact that the remaining spare space is insufficient. Each time the image pickup operation is carried out and the picked-up image is stored, the present invention provides for checking the memory to the determine if a memory space necessary for storing the next image is sufficient, and thus prevents the user from missing an important picture or scene because of the insufficient memory space. Subsequently, the controller 300 stores the currently picked-up image at step 418, and checks the power OFF state at step 420. In case of the power OFF state, the process ends. Otherwise, the controller 300 maintains the standby state at step 400.

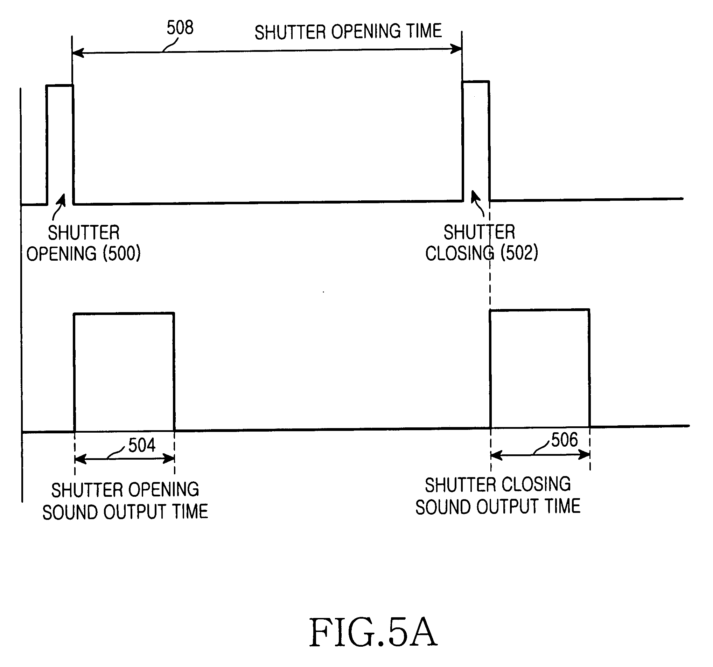

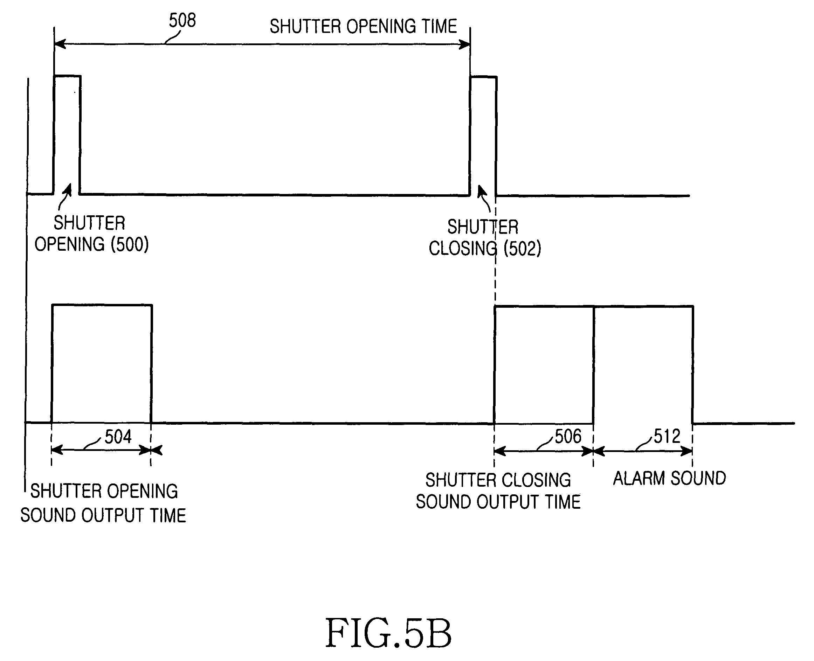

A time for outputting the shutter opening sound, the shutter closing sound, the film winding motor sound or the alarm sound in the digital camera as described in relation to FIG. 4 will be described with reference to FIGS. 5A and 5B. Time periods in which the shutter opening sound, the shutter closing sound and the film winding motor sound are outputted will be described with reference to FIG. 5A.

FIG. 5A is a timing chart illustrating the shutter sound output time in accordance with an embodiment of the present invention. Referring to FIG. 5A, when the shutter is opened as indicated by reference numeral 500, the shutter opening sound is outputted for the duration of a shutter opening time 508. After waiting for the shutter opening time 508 to expire, the controller 300 outputs the shutter closing sound for a shutter closing output time 506 when the shutter is closed as indicated by reference numeral 502. Since the spare space of the memory 306 can store not only a currently picked-up image but also the next picked-up image as shown in FIG. 5A, the film winding motor sound is outputted for a predetermined time and the user is notified of the normal state.

A time for outputting the shutter opening sound, the shutter closing sound or the alarm sound for notifying the user of an insufficient memory space will be described with reference to FIG. 5B. FIG. 5B is a timing chart illustrating the shutter sound output time and the alarm sound output time in accordance with an embodiment of the present invention. As shown in FIG. 5B, when the shutter is opened as indicated by reference numeral 500, the shutter opening sound is outputted for the duration of a shutter opening sound output time 504 Subsequently, when the shutter is closed as indicated by reference numeral 502 after the shutter opening time elapses, the controller 300 outputs the shutter closing sound for a shutter closing sound output time 506. FIG. 5B shows the case where the spare space of the memory 306 can store only the currently picked-up image and cannot store the next image. The alarm sound is outputted for a time interval 512 and the user is notified of an abnormal state, so that the user can manage the memory 306 to pick up the next image.

In summary, when the pickup button is pressed in accordance with the present invention, an amount of light inputted through the lens from the image pickup device is measured, a shutter opening time is calculated, and the shutter is opened. Data of the shutter opening sound is read and outputted to the speaker. Moreover, the shutter is closed after the calculated shutter opening time. The shutter closing sound is outputted for a shutter closing sound output time subsequent to the shutter opening time.

As described above, the present invention allows the shutter opening sound and the shutter closing sound to be separately stored. The present invention performs a control operation so that the shutter opening sound is outputted at the time of opening the shutter and the shutter closing sound is outputted at the time of closing the shutter. The present invention correctly notifies the user of an end time of the pickup operation. Moreover, where a spare space of the memory for storing the image is insufficient, the alarm sound is outputted, such that the user can be notified of the insufficient spare space before attempting the next pickup operation.

Because the shutter opening time is almost the same as the shutter sound output time, the present invention can vary shutter sound output intervals as in an actual shutter according to an amount of light when a pickup operation is carried out and hence give the user a realistic feel. Moreover, the present invention can correctly notify a user of an end time of the pickup operation when an image is picked up through a digital camera, thereby allowing the user to carry out a stable pickup operation. The present invention allows the user to determine whether or not a picked-up image has been blurred because the user can recognize that an amount of light is insufficient through the shutter sound after the pickup operation. When the picked-up image is stored, the memory space for storing the next image can be checked. Where the memory space is insufficient, the alarm sound is outputted and the user can recognize that the memory space is insufficient.

Although the preferred embodiments of the present invention have been disclosed for illustrative purposes, those skilled in the art will appreciate that various modifications, additions and substitutions are possible, without departing from the scope of the invention. Output sounds outputted from the digital camera have been described in the embodiments of the present invention, but all apparatuses capable of being equipped with a digital camera, for example, camera phones, can use shutter sounds and an alarm sound. Therefore, the present invention is not limited to the above-described embodiments, but the present invention is defined by the claims which follow, along with their full scope of equivalents.

## Claims

1. An apparatus for controlling an output sound in a digital camera, comprising:
a controller (300) for performing a control operation to calculate a shutter opening time when an input for an image pickup operation is present, opening a shutter and outputting a shutter opening sound, and closing the shutter after expiration of the shutter opening time and outputting a shutter closing sound.

2. The apparatus according to claim 1, comprising a memory (306) for storing the shutter opening sound, the shutter closing sound and/or at least one picked-up image.

3. The apparatus according to claim 2, wherein the controller
checks a spare space of the memory (306) after outputting the shutter closing sound,
outputs a first sound if a size of the spare space of the memory (306) is greater than or equal to a size of the picked-up image, and a size of a remaining spare space of the memory (306) from which a space for storing the picked-up image is subtracted is greater than or equal to a basic image size, and
performs a control operation and stores the picked-up image in the memory (306).

4. The apparatus according to claims 2 , wherein the controller checks the spare space of the memory (306), and
performs a control operation and outputs an error message if the size of the spare space of the memory is smaller than the size of the picked-up image after the shutter closing sound has been outputted.

5. The apparatus according to claims 2, wherein the controller checks the spare space of the memory (306), and
outputs an alarm sound to notify a user of an insufficient memory space, if the size of the spare space of the memory (306) is greater than or equal to the size of the picked-up image, but the size of the remaining spare space of the memory (306) from which the space for storing the picked-up image is subtracted is smaller than the basic image size.

6. The a pparatus according to claim 5, wherein the controller (300) outputs the alarm sound to notify the user of the insufficient m emory space and then stores the picked-up image in the memory (306).

7. The apparatus according to claim 3, wherein the first sound is a film winding motor sound.

8. A method for controlling an output sound in a digital camera, comprising the steps of:
calculating a shutter opening time when an input for an image pickup operation is present, opening a shutter and outputting the shutter opening sound; and
closing the shutter after waiting for the expiration of the shutter opening time and outputting the shutter closing sound.

9. The method according to claim 8, comprising the step of storing a shutter opening sound and a shutter closing sound in a memory (306).

10. The method according to claim 8 or 9, wherein the shutter opening sound is outputted for the shutter opening time.

11. The method according to any of claims 8 to 10, further comprising the steps of:
checking a spare space of a memory (306) for storing a picked-up image after outputting the shutter closing sound; and
outputting a first sound if a size of the spare space of the memory (306) is greater than or equal to a size of the picked-up image, and a size of a remaining spare space of the memory from which a space for storing the picked-up image is subtracted is greater than or equal to a basic image size.

12. The method according to any of claims 8 to 10, further comprising the steps of:
checking the spare space of a memory (306) for storing a picked-up image; and
outputting an error message if the size of the spare space of the memory (306) is smaller than the size of the picked-up image after the shutter closing sound has been outputted.

13. The method according to any of claims 8 to 10, further comprising the steps of:
checking the spare space of a memory (306) for storing a picked-up image; and
outputting an alarm sound to notify a user of an insufficient memory space, if the size of the spare space of the memory (306) is greater than or equal to the size of the picked-up image, but the size of the remaining spare space of the memory (306) from which the space for storing the picked-up image is subtracted is smaller than the basic image size.

14. The method according to claim 13, further comprising the step of:
storing the picked-up image in the memory (306) after outputting the alarm sound to notify the user of the insufficient memory space.

15. The method according to claim 11, wherein the first sound is a film winding motor sound.
